# EUROPÄISCHE PATENTSCHRIFT

(11) **EP 2 949 610 B1**
(45) Veröffentlichungstag und Bekanntmachung des Hinweises auf die Patenterteilung: **11.01.2017**
(21) Anmeldenummer: 15167117.9
(22) Anmeldetag: 11.05.2015
(51) Int. Cl.: B65H 37/00, B65G 21/14

(54) **VORRICHTUNG ZUM WECHSELWEISEN BEARBEITEN VON FLEXIBLEN, BANDFÖRMIGEN SUBSTRATEN**
SYSTEM FOR ALTERNATE PROCESSING OF FLEXIBLE, TAPE-LIKE SUBSTRATES
DISPOSITIF DE TRAITEMENT RÉCIPROQUE DE SUBSTRATS SOUPLES, EN FORME DE BANDE

(30) Priorität: 12.05.2014 DE 102014106690
(43) Veröffentlichungstag der Anmeldung: 02.12.2015
(73) Patentinhaber: Beier, Uwe, 01458 Ottendorf-Okrilla (DE)
(72) Erfinder: Beier, Uwe, 01458 Ottendorf-Okrilla (DE)
(74) Vertreter: Riechelmann & Carlsohn Patentanwälte

(56) Entgegenhaltungen:
- EP-A1- 2 554 143
- EP-A2- 1 026 111
- JP-A- H05 155 484
- US-A- 4 475 974

## Beschreibung

Die Erfindung betrifft eine Vorrichtung zum wechselweisen Bearbeiten flexibler, bandförmiger Substrate.

Flexible, bandförmige Substrate können aus den vielfältigsten Materialien bestehen, die bekanntesten sind Kunststoffe und Metalle, zunehmend sind auch Glasfaser-, Carbon-, Hybrid- und sogar Glasmaterialien in flexibler Form erhältlich. Die flexiblen Substrate werden üblicherweise in Form einer Rolle (die auch als Coil bezeichnet wird) transportiert und aufbewahrt. Für die Bearbeitung werden die flexiblen Substrate als Band von einem ersten Coil, der auf einem Abwickler gelagert ist, abgewickelt, in der Prozess-Sektion bearbeitet und danach auf einem anderen, zweiten Coil, der auf einem Aufwickler gelagert ist, wieder aufgewickelt. In der Prozess-Sektion sind Bearbeitungseinrichtungen angeordnet, die auf das flexible Substrat einwirken können. Vorrichtungen zur Bearbeitung flexibler, bandförmiger Substrate sind beispielsweise aus DE 11 2008 001 359 T5, DE 693 32 355 T2 und DE 10 2005 058 869 A1 bekannt. Ferner werden Vorrichtungen zur Bearbeitung flexibler, bandförmiger Substrate in DE 10 2013 103 590 A1 und in der früheren unveröffentlichten deutschen Patentanmeldung Nr. 10 2014 105 747.3 Dokument JPH5-155484 offenbart eine Vorrichtung zur Bearbeitung von Substraten mit ortsbeweglichen Führungsmitteln.

Die für die Bearbeitung eines flexiblen, bandförmigen Substrates erforderlichen Bearbeitungseinheiten sind häufig technisch anspruchsvoll und damit teuer. Die Bearbeitungseinrichtungen, beispielsweise Einrichtungen zur Laserbearbeitung, sind daher in den bekannten Vorrichtungen so angeordnet, dass die Bearbeitung genau eines flexiblen, bandförmigen Substrates möglich ist. Soll ein zweites flexibles, bandförmiges Substrat in gleicher Weise bearbeitet werden, ist entweder eine zweite Bearbeitungseinrichtung erforderlich oder die Bearbeitung des ersten flexiblen, bandförmigen Substrates mittels der ersten Bearbeitungseinrichtung muss abgeschlossen sein, bevor die Bearbeitung des zweiten flexiblen, bandförmigen Substrates beginnen kann.

Sind zwei oder mehr Substratbahnen gleichzeitig in einer Vorrichtung zu bearbeiten, so sind nach dem Stand der Technik für jeden Bahnlauf separate Bearbeitungseinrichtungen notwendig, was mit einem hohen Platzbedarf und enormen Kosten verbunden ist.

Aufgabe der Erfindung ist es, die Nachteile nach dem Stand der Technik zu beseitigen. Es soll insbesondere eine Vorrichtung zum Bearbeiten von flexiblen, bandförmigen Substraten angegeben werden, die die wechselweise Bearbeitung mehrerer bandförmiger Substrate mit einer Bearbeitungseinrichtung ermöglicht.

Diese Aufgabe wird durch die Merkmale von Anspruch 1 gelöst. Zweckmäßige Ausgestaltungen der Erfindungen ergeben sich aus den Merkmalen der Unteransprüche.

Nach Maßgabe der Erfindung ist eine Vorrichtung zum wechselweisen Bearbeiten von zumindest zwei flexiblen, bandförmigen Substraten vorgesehen, wobei die Vorrichtung zumindest eine Bearbeitungseinrichtung zur Bearbeitung der Substrate und ortsbewegliche Führungsmittel zum Führen der Substrate in eine Bearbeitungsposition, in der die Bearbeitungseinrichtung wechselweise auf eines der Substrate einwirken kann, aufweist, wobei für jedes flexible Substrat ein Paar ortsbeweglicher Führungsmittel vorgesehen ist und die Paare ortsbeweglicher Führungsmittel auf einem verstellbaren Träger angeordnet sind, so dass sich wechselweise ein Substrat in der Bearbeitungsposition befindet.

Vorzugsweise weist die Vorrichtung ferner ortsfeste Führungsmittel zum Führen der Substrate auf, wobei für jedes Substrat ein Paar ortsfester Führungsmittel vorgesehen ist und wobei das Paar ortsbeweglicher Führungsmittel eines Substrates, bezogen auf den Bahnlauf des flexiblen Substrates, zwischen dem Paar ortfester Führungsmittel des Substrates angeordnet ist.

Die ortsfesten Führungsmittel sollten zum Träger so angeordnet sein, dass die am Träger befindlichen Teile einer Substratbahn jeweils parallel zueinander verlaufen. Die Bewegung des Trägers sollte dann in einer Richtung parallel zu den parallelen Abschnitten der Substratbahnen ausgeführt werden, also nicht quer oder schräg dazu.

Zweckmäßigerweise sind die ortsfesten Führungsmittel und die ortsbeweglichen Führungsmittel so angeordnet, dass eine Verstellung des Trägers die Länge der Substratbahn, die auf dem Paar ortsbeweglicher Führungsmittel und dem Paar ortsfester Führungsmittel geführt werden, nicht verändert wird. Daher beeinflusst die Verstellung des Trägers die auf die Substrate einwirkenden Zugkräfte nicht.

Die Erfindung ermöglicht daher die wechselweise Bearbeitung flexibler, bandförmiger Substrate in einer Vorrichtung unter Einsatz nur einer Bearbeitungseinrichtung. In der Bearbeitungsposition ist der Abstand zwischen der Bearbeitungseinrichtung und dem Substrat, das sich in der Bearbeitungsposition befindet, immer derselbe, und zwar unabhängig davon, welches der zwei oder mehr Substrate bearbeitet wird. Mittels der erfindungsgemäßen Vorrichtung werden beide Substratbahnen aufgrund der wechselweisen Bewegung des Trägers von einer ersten Position in eine zweite Position an der Bearbeitungseinrichtung in exakt gleichem Abstand zur Bearbeitungseinrichtung an dieser vorbeigeführt.

Vorzugsweise ist der Abstand zwischen den ortsbeweglichen Führungsmitteln eines Paares von ortsbeweglichen Führungsmitteln unveränderlich. Vorzugsweise ist der Abstand zwischen allen ortsbeweglichen Führungsmitteln, die auf dem Träger angeordnet sind, unveränderlich. In Bezug auf den Träger verändern die ortsbeweglichen Führungsmittel ihre Lage nicht. Da der Träger selbst verstellbar und damit ortsbeweglich ist, verändert sich die Lage der ortsbeweglichen Führungsmittel in Bezug auf die Bearbeitungseinrichtung, wenn der Träger seine Lage in Bezug auf die Bearbeitungseinrichtung verändert. Vorzugsweise sind die ortsbeweglichen Führungsmittel auf einer Achse angeordnet.

Vorzugsweise sind die ortsbeweglichen Führungsmittel Rollen. Diese Rollen werden nachfolgend als ortsbewegliche Rollen bezeichnet. Vorzugsweise sind die ortsfesten Führungsmittel Rollen. Diese Rollen werden nachfolgend als ortsfeste Rollen bezeichnet. Die ortsbeweglichen und die ortsfesten Rollen sind zweckmäßigerweise Umlenkrollen.

Die Bearbeitungseinrichtung sollte ortsfest sein. Bei der Bearbeitungseinrichtung kann es sich um eine Einrichtung zur Oberflächenbearbeitung eines Substrates handeln. Ein Beispiel einer solchen Bearbeitungseinrichtung ist eine Einrichtung zur Laserbearbeitung eines Substrates. Die erfindungsgemäße Vorrichtung ist insbesondere für die Laserbearbeitung von Substraten geeignet, weil die Bearbeitung von Substraten mittels Laser sehr schnell erfolgt, das Laserequipment jedoch sehr teuer ist.

Der Träger ist von einer ersten Position, in der sich ein erstes Substrat in der Bearbeitungsposition befindet, in eine zweite Position, in der sich ein zweites Substrat in der Bearbeitungsposition befindet, und umgekehrt verstellbar. Sind mehr als zwei Substrate vorgesehen, ist der Träger ferner in weitere Positionen verstellbar, in denen sich jeweils ein weiteres Substrat in der Bearbeitungsposition befindet. Zweckmäßigerweise ist der Träger angetrieben, beispielsweise mittels einer Antriebseinrichtung. Der Träger kann balkenförmig sein. Er kann daher, wenn die ortsbeweglichen Führungsmittel Rollen sind, als Rollenbalken bezeichnet werden. Es können Einrichtungen zur Führung des Trägers vorgesehen sein. Damit kann der Träger ein auf einer Achse beweglicher, geführter und angetriebener Träger sein.

Die Vorrichtung umfasst zweckmäßigerweise ein Gehäuse. In diesem Gehäuse sind die zumindest eine Bearbeitungseinrichtung, die ortsbeweglichen und die ortsfesten Führungsmittel und der Träger angeordnet. Durch das Gehäuse werden die Substrate, die mittels der Bearbeitungseinrichtung bearbeitet werden sollen, als Bahnen, sogenannte Substratbahnen, geführt. Die Vorrichtung kann ferner Abwickler und Aufwickler für jedes der Substrate und Leiteinrichtungen zum Leiten der Substrate von den Abwicklern zu den ortsfesten und ortsbeweglichen Führungsmitteln und von dort zu den Aufwicklern umfassen. Ist ein Gehäuse vorgesehen, so beziehen sich die Angaben "ortsfest" und "ortsbeweglich" auf die Lage der entsprechenden Einheiten in dem Gehäuse. Bei den Leiteinrichtungen kann es sich beispielsweise um Rollen handeln.

Die Substrate können gleich oder unterschiedlich sein. Die Laufrichtung der Substratbahnen kann gleich oder gegenläufig sein. Die Geschwindigkeit der Substratbahnen kann gleich oder unterschiedlich sein. Beispielsweise kann eine Substratbahn für die Bearbeitung angehalten werden, während die andere Substratbahn weiterläuft. Aus diesem Grund kann die erfindungsgemäße Vorrichtung auch als Coil-Wechsel-Einheit verwendet werden. Dabei läuft eine Substratbahn durch die Vorrichtung und an der Bearbeitungseinrichtung vorbei, während eine andere Substratbahn während dieser Zeit gewechselt werden kann, wozu ein volles Coil in die Vorrichtung eingelegt wird. Ist beispielsweise ein erstes Coil für ein Substrat aufgebraucht, kann von der Steuerung automatisch und sozusagen "on the fly", also ohne Verzögerung, auf ein zweites Coil umgeschaltet werden. Das kann enorme Vorteile bringen, da die Anlage zum Coilwechsel nicht angehalten werden muss.

Die erfindungsgemäße Vorrichtung ermöglicht einen sehr kompakten Aufbau, erfordert nur wenige Teile und erlaubt die Verwendung von Standard-Komponenten, die billig, und leicht beschaffbar sind.

Weitere Merkmale ergeben sich aus den nachstehenden, die Erfindung nicht beschränkenden Zeichnungen und den zugehörigen Erläuterungen. Dabei zeigen
- Fig. 1: eine schematische Darstellung einer Ausführungsform der erfindungsgemäßen Vorrichtung zur Bearbeitung von zwei Substraten;
- Fig. 2: eine schematische Darstellung der in Fig. 1 gezeigten Ausführungsform, wobei sich das erste Substrat in der Bearbeitungsposition befindet;
- Fig. 3: eine schematische Darstellung der in Fig. 1 gezeigten Ausführungsform, wobei sich das zweite Substrat in der Bearbeitungsposition befindet; und
- Fig. 4: eine schematische Darstellung der in Fig. 1 gezeigten Ausführungsform, in der der am Träger parallele Bahnlauf von Abschnitten der Substrate zueinander gekennzeichnet ist.

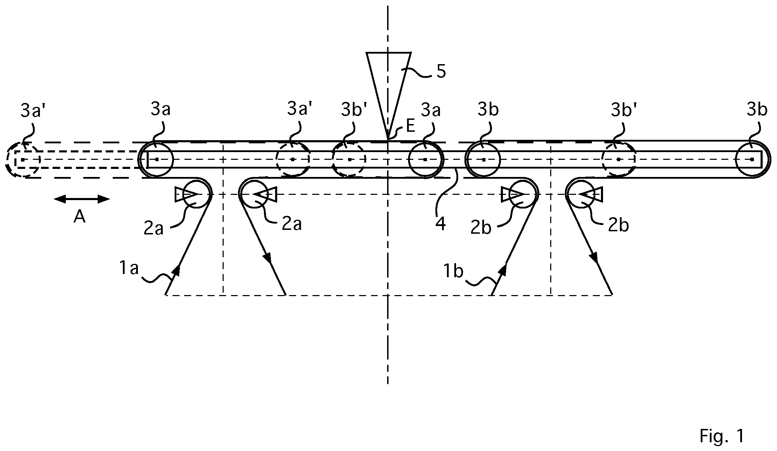

Die in den Figuren 1 bis 4 gezeigte Ausführungsform einer erfindungsgemäßen Vorrichtung ist zur wechselweisen Bearbeitung von zwei Substraten 1a, 1b mittels einer Bearbeitungseinrichtung 5 bestimmt. Die Bearbeitungseinrichtung 5 verändert dabei ihre Lage nicht. Die Vorrichtung weist ortsbewegliche Rollen 3a, 3b und ortsfeste Rollen 2a, 2b auf. Das erste Substrat 1a wird über ein Paar ortsfester Rollen 2a und ein Paar ortsbeweglicher Rollen 3a geführt. Das zweite Substrat 1b wird über ein Paar ortsfester Rollen 2b und ein Paar ortsbeweglicher Rollen 3b geführt. Die ortsbeweglichen Rollen 3a, 3b sind auf einem Träger 4 angeordnet, hier einem geraden balkenförmigen Element, der als Rollenbalken bezeichnet ist. Die Abstände der ortsbeweglichen Rollen 3a, 3b zueinander auf dem Träger 4 sind unveränderlich. Die ortsbeweglichen Rollen 3a, 3b sind in einer Reihe angeordnet, d. h. ihre Drehachsen verlaufen parallel zueinander und orthogonal zur Längsachse des Trägers 4. Die Drehachsen der ortsbeweglichen Rollen 3a, 3b liegen damit in einer Ebene. Zweckmäßigerweise verlaufen die Drehachsen der ortsfesten Rollen 2a, 2b ebenfalls parallel zueinander und zu den Drehachsen der ortsbeweglichen Rollen 3a, 3b. Sie liegen in einer Ebene, die parallel zur Ebene der Drehachsen der ortsbeweglichen Rollen 3a, 3b liegt. Der Abstand zwischen beiden Ebenen ist so eingestellt, dass bei beiden Substraten 1a, 1b die Abschnitte der Substratbahnen, die zwischen einem ortsfesten Führungsmittel 2a, 2b und einem ortsbeweglichen Führungsmittel 3a, 3b liegen, parallel zu dem Abschnitt der Substratbahn verlaufen, der zwischen den ortsbeweglichen Führungsmitteln 3a, 3b eines Paares von Führungsmitteln 3a, 3b liegt.

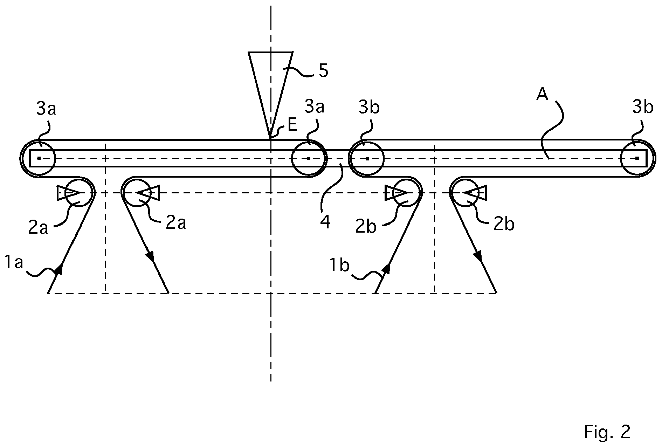

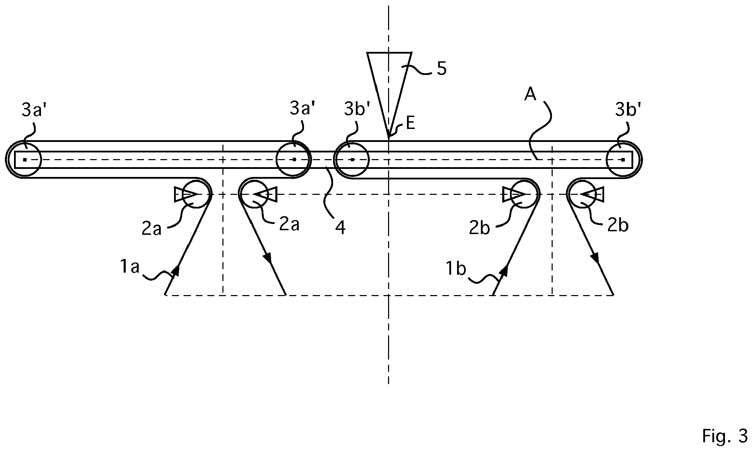

Wird der Träger 4 verstellt (Pfeil A), verändert sich die Lage der ortsbeweglichen Rollen 3a, 3b zur Bearbeitungseinrichtung 5. In Fig. 2 befindet sich der Träger 4 in einer ersten Position, so dass sich das erste Substrat 1a in der Bearbeitungsposition E befindet. In Fig. 3 befindet sich der Träger 4 in einer zweiten Position, so dass sich das zweite Substrat 1b in der Bearbeitungsposition E befindet. Die in Fig. 3 gezeigte zweite Position des Trägers 4 und damit der ortsbeweglichen Rollen 3a, 3b entspricht der in Fig. 1 gestrichelt wiedergegebenen Position des Trägers 4 und der ortsbeweglichen Rollen, die zur Unterscheidung von der ersten Position mit einem Strich als 3a' bzw. 3b' gekennzeichnet ist.

Es ist in den Figuren zu erkennen, dass die Verstellung des Trägers 4 von der ersten Position in die zweite Position keinen Einfluss auf die Länge der Substratbahn zwischen dem Paar ortsfester Rollen 2a, 2b hat. Mit anderen Worten, die Länge der Substratbahn des ersten Substrates 1a zwischen dem Paar ortsfester Rollen 2a verändert sich nicht, unabhängig davon, ob sich das erste Substrat in der Bearbeitungsposition E befindet oder nicht. Ebenso verändert sich die Länge der Substratbahn des zweiten Substrates 1b zwischen dem Paar ortsfester Rollen 2b nicht, unabhängig davon, ob sich das zweite Substrat in der Bearbeitungsposition E befindet oder nicht. Aufgrund dieses Umstandes verändert die Verstellung des Trägers 4 nicht die Zugkräfte, die auf die Substrate 1a, 1b einwirke.

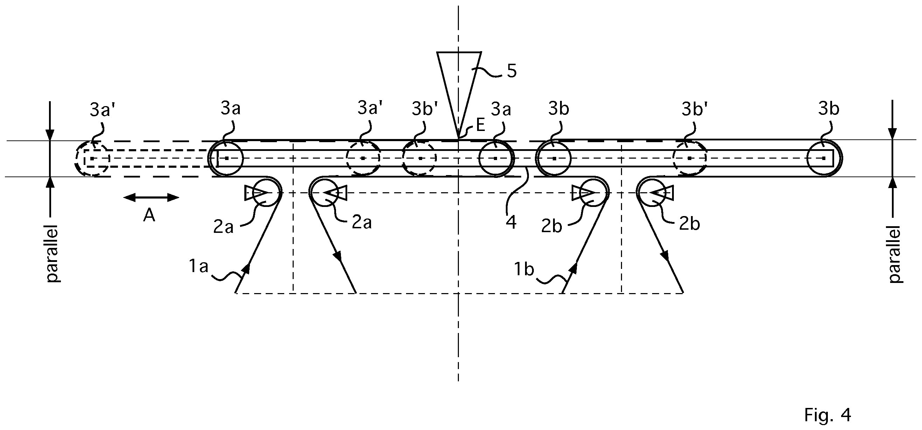

Die ortsfesten Rollen 2a, 2b sind zu den ortsbeweglichen Rollen 3a, 3b so angeordnet, dass die Substratbahnen der Substrate 1a, 1b am Träger 4 parallel zueinander geführt werden (Fig. 4). Das heißt für das erste Substrat 1a, dass der Abschnitt der Substratbahn zwischen der, bezogen auf die Laufrichtung der Substratbahn, ersten ortfesten Rolle 2a und der anschließenden ersten ortsbeweglichen Rolle 3a parallel zum Abschnitt der Substratbahn zwischen den beiden ortsbeweglichen Rollen 3a liegt und dass ebenfalls der Abschnitt der Substratbahn zwischen der, bezogen auf die Laufrichtung der Substratbahn, zweiten ortsbeweglichen Rolle 3a und der anschließenden zweiten ortsfesten Rolle 2a parallel zum Abschnitt der Substratbahn zwischen den beiden ortsbeweglichen Rollen 3a liegt. Damit bewegen sich der Abschnitt der Substratbahn zwischen der, bezogen auf die Laufrichtung der Substratbahn, ersten ortfesten Rolle 2a und der anschließenden ersten ortsbeweglichen Rolle 3a und der Abschnitt zwischen der Substratbahn zwischen der, bezogen auf die Laufrichtung der Substratbahn, zweiten ortbeweglichen Rolle 3a und der anschließenden zweiten ortsfesten Rolle 2a in einer Ebene, die parallel zum Abschnitt der Substratbahn zwischen den beiden ortsbeweglichen Rollen 3a liegt. Das heißt für das zweite Substrat 1b, dass der Abschnitt der Substratbahn zwischen der, bezogen auf die Laufrichtung der Substratbahn, ersten ortfesten Rolle 2b und der anschließenden ersten ortsbeweglichen Rolle 3b parallel zum Abschnitt der Substratbahn zwischen den beiden ortsbeweglichen Rollen 3b liegt und dass ebenfalls der Abschnitt der Substratbahn zwischen der, bezogen auf die Laufrichtung der Substratbahn, zweiten ortbeweglichen Rolle 3b und der anschließenden zweiten ortsfesten Rolle 2b parallel zum Abschnitt der Substratbahn zwischen den beiden ortsbeweglichen Rollen 3a liegt. Damit bewegen sich der Abschnitt der Substratbahn zwischen der, bezogen auf die Laufrichtung der Substratbahn, ersten ortfesten Rolle 2b und der anschließenden ersten ortsbeweglichen Rolle 3b und der Abschnitt zwischen der Substratbahn zwischen der, bezogen auf die Laufrichtung der Substratbahn, zweiten ortbeweglichen Rolle 3b und der anschließenden zweiten ortsfesten Rolle 2b in einer Ebene, die parallel zum Abschnitt der Substratbahn zwischen den beiden ortsbeweglichen Rollen 3b liegt.

Vorzugsweise liegen die Abschnitte der Substratbahnen aller Substrate 1a, 1b, die zwischen den ortsbeweglichen Rollen 3a, 3b eines Paares von ortsbeweglichen Rollen 3a, 3b liegen, in einer ersten Ebene, während die Abschnitte der Substratbahnen, die zwischen einer ortsfesten Rolle 2a, 2b und einer ortsbeweglichen Rolle 3a, 3b liegen, in einer zweiten Ebene, die parallel zur ersten Ebene verläuft, liegen.

Es ist in den Figuren ferner zu erkennen, dass der Abstand zwischen der Bearbeitungseinrichtung 5 und dem ersten Substrat 1a in der Bearbeitungsposition E (Fig. 2) dem Abstand zwischen der Bearbeitungseinrichtung 5 und dem zweiten Substrat 1b entspricht, wenn sich das zweite Substrat 1b anstelle des ersten Substrates 1a in der Bearbeitungsposition E befindet.

Auf die Laufrichtung der Substratbahnen der Substrate 1a, 1b kommt es nicht an. Die Laufrichtung der Substratbahnen kann, wie in den Figuren gezeigt, an der Bearbeitungsposition gleich sein. Sie kann aber auch entgegengesetzt sein. Beide Substratbahnen können die gleiche Bahngeschwindigkeit oder unterschiedliche Bahngeschwindigkeiten besitzen.

### Bezugszeichenliste

- 1a: erstes Substrat
- 1b: zweites Substrat
- 2a: ortsfeste Rolle für das erste Substrat
- 2b: ortsfeste Rolle für das zweite Substrat
- 3a: ortsbewegliche Rolle für das erste Substrat
- 3b: ortsbewegliche Rolle für das zweite Substrat
- 4: Träger
- 5: Bearbeitungseinrichtung
- E: Bearbeitungsposition

## Patentansprüche

1. Vorrichtung zum wechselweisen Bearbeiten von zumindest zwei flexiblen, bandförmigen Substraten (1a, 1b), wobei die Vorrichtung (1) zumindest eine Bearbeitungseinrichtung (5) zur Bearbeitung der Substrate (1a, 1b) und ortsbewegliche Führungsmittel (3a, 3b) zum Führen der Substrate (1a, 1b) in eine Bearbeitungsposition (E) aufweist, **dadurch gekennzeichnet, dass** in der Bearbeitungsposition (E) die Bearbeitungseinrichtung (5) wechselweise auf eines der Substrate (1a, 1b) einwirken kann, wobei für jedes flexible Substrat (1a, 1b) ein Paar ortsbeweglicher Führungsmittel (3a, 3b) vorgesehen ist und die Paare ortsbeweglicher Führungsmittel (3a, 3b) auf einem verstellbaren Träger (4) angeordnet sind, so dass sich wechselweise ein Substrat (1a, 1b) in der Bearbeitungsposition (E) befindet.

2. Vorrichtung nach Anspruch 1, **dadurch gekennzeichnet, dass** die Vorrichtung ferner ortsfeste Führungsmittel (2a, 2b) zum Führen der Substrate (1a, 1b) aufweist, wobei für jedes Substrat (1a, 1b) ein Paar ortsfester Führungsmittel (2a, 2b) vorgesehen ist und wobei das Paar ortsbeweglicher Führungsmittel (3a, 3b) eines Substrates (1a, 1b), bezogen auf den Bahnlauf des flexiblen Substrates (1a, 1b), zwischen dem Paar ortfester Führungsmittel (2a, 2b) des Substrates (1a, 1b) angeordnet ist.

3. Vorrichtung nach Anspruch 1 oder Anspruch 2, **dadurch gekennzeichnet, dass** der Abstand zwischen den ortsbeweglichen Führungsmitteln (3a, 3b) eines Paares von ortsbeweglichen Führungsmitteln (3a, 3b) konstant ist.

4. Vorrichtung nach einem der vorstehenden Ansprüche, **dadurch gekennzeichnet, dass** die ortsbeweglichen Führungsmittel (3a, 3b) auf einer Achse angeordnet sind.

5. Vorrichtung nach einem der vorstehenden Ansprüche, **dadurch gekennzeichnet, dass** der Träger (4) angetrieben ist.

6. Vorrichtung nach einem der vorstehenden Ansprüche, **dadurch gekennzeichnet, dass** eine Antriebseinrichtung für den Träger (4) vorgesehen ist, die den Träger (4) in eine erste Position, in der sich ein erstes Substrat (1a) in der Bearbeitungsposition (E) befindet, oder in eine zweite Position, in der sich ein zweites Substrat (1b) in der Bearbeitungsposition (E) befindet, verstellt.

7. Vorrichtung nach einem der vorstehenden Ansprüche, **dadurch gekennzeichnet, dass** sie ferner einen Abwickler und einen Aufwickler für jedes der Substrate (1a, 1b) und Leiteinrichtungen zum Leiten der Substrate von den Abwicklern zu den ortsfesten und ortsbeweglichen Führungsmitteln (2, 3) und von dort zu den Aufwicklern aufweist.

8. Vorrichtung nach einem der vorstehenden Ansprüche, **dadurch gekennzeichnet, dass** die ortsbeweglichen Führungsmittel (3a, 3b) Rollen sind.

9. Vorrichtung nach einem der vorstehenden Ansprüche, **dadurch gekennzeichnet, dass** die ortsfesten Führungsmittel (2a, 2b) Rollen sind.

10. Vorrichtung nach einem der vorstehenden Ansprüche, **dadurch gekennzeichnet, dass** die ortsfesten Führungsmittel (2a, 2b) so zu den ortsbeweglichen Führungsmitteln (3a, 3b) angeordnet sind, dass bei jedem Substrat (1a, 1b) die Abschnitte einer Substratbahn, die zwischen einem ortsfesten Führungsmittel (2a, 2b) und einem ortsbeweglichen Führungsmittel (3a, 3b) liegen, parallel zu dem Abschnitt der Substratbahn verlaufen, der zwischen den ortsbeweglichen Führungsmitteln (3a, 3b) eines Paares von ortsbeweglichen Führungsmitteln (3a, 3b) liegt.

## Claims

1. A device for alternately processing at least two flexible, band-shaped substrates (1a, 1b), the device (1) having at least one processing facility (5) for processing the substrates (1a, 1b) and mobile guiding means (3a, 3b) for guiding the substrates (1a, 1b) to a processing position (E), **characterized in that** in the processing position (E) the processing facility (5) can alternately act on one of the substrates (1a, 1b), wherein a pair of mobile guiding means (3a, 3b) is provided for each flexible substrate (1a, 1b) and the pairs of mobile guiding means (3a, 3b) are arranged on an adjustable carrier (4), so that alternately one substrate (1a, 1b) is in the processing position (E).

2. The device according to claim 1, **characterized in that** the device further has stationary guiding means (2a, 2b) for guiding the substrates (1a, 1b), wherein a pair of stationary guiding means (2a, 2b) is provided for each substrate (1a, 1b), and wherein the pair of mobile guiding means (3a, 3b) of a substrate (1a, 1b) is arranged between the pair of stationary guiding means (2a, 2b) of the substrate (1a, 1b) with respect to the web travel of the flexible substrate (1a, 1b).

3. The device according to claim 1 or claim 2, **characterized in that** the distance between the mobile guiding means (3a, 3b) of a pair of mobile guiding means (3a, 3b) is constant.

4. The device according to any one of the preceding claims, **characterized in that** the mobile guiding means (3a, 3b) are arranged on one axis.

5. The device according to any one of the preceding claims, **characterized in that** the carrier (4) is driven.

6. The device according to any one of the preceding claims, **characterized in that** a drive facility for the carrier (4) is provided that adjusts the carrier (4) to a first position in which a first substrate (1a) is in the processing position (E) or to a second position in which a second substrate (1b) is in the processing position (E).

7. The device according to any one of the preceding claims, **characterized in that** it further has an unwinder and a rewinder for each of the substrates (1a, 1b) and directing facilities for directing the substrates from the unwinders to the stationary and mobile guiding means (2, 3) and from there to the rewinders.

8. The device according to any one of the preceding claims, **characterized in that** the mobile guiding means (3a, 3b) are rollers.

9. The device according to any one of the preceding claims, **characterized in that** the stationary guiding means (2a, 2b) are rollers.

10. The device according to any one of the preceding claims, **characterized in that** the stationary guiding means (2a, 2b) are arranged relative to the mobile guiding means (3a, 3b) such that with each substrate (1a, 1b) the sections of a substrate web located between a stationary guiding means (2a, 2b) and a mobile guiding means (3a, 3b) extend in parallel to the section of the substrate web that is located between the mobile guiding means (3a, 3b) of a pair of mobile guiding means (3a, 3b).

## Revendications

1. Dispositif de traitement alternatif d'au moins deux substrats (1a, 1b) flexible, en forme de bande, le dispositif (1) présentant au moins un dispositif de traitement (5) pour traitement des substrats (1a, 1b) et des moyens de guidage mobiles (3a, 3b) pour guider les substrats (1a, 1b) dans une position de traitement (E) dans laquelle le dispositif de traitement (5) peut agir alternativement sur l'un des substrats (1a, 1b), pour chaque substrat (1a, 1b) flexible, une paire de moyens de guidage mobiles (3a, 3b) étant prévue et la paire de moyens de guidage mobile (3a, 3b) étant placée sur un support (4) réglable de façon qu'un substrat (1a, 1b) se trouve alternativement en position de traitement (E).

2. Dispositif selon la revendication 1 **caractérisé en ce que** le dispositif présente de plus des moyens de guidage fixes (2a, 2b) pour guider les substrats (1a, 1b), pour chaque substrat (1a, 1b), une paire de moyens de guidage fixes (2a, 2b) étant prévue et la paire de moyens de guidage mobiles (3a, 3b) d'un substrat (1a, 1b), en référence au passage de la bande du substrat flexible (1a, 1b), étant placée entre la paire des moyens de guidage fixes (2a, 2b) du substrat (1a, 1b).

3. Dispositif selon la revendication 1 ou la revendication 2 **caractérisé en ce que** la distance entre les moyens de guidage mobiles (3a, 3b) d'une paire de moyens de guidage mobiles (3a, 3b) est constante.

4. Dispositif selon l'une des revendications précédentes **caractérisé en ce que** les moyens de guidage mobiles (3a, 3b) sont placés sur un axe.

5. Dispositif selon l'une des revendications précédentes **caractérisé en ce que** le support (4) est entraîné.

6. Dispositif selon l'une des revendications précédentes **caractérisé en ce que** pour le support (4) est prévu un dispositif d'entraînement qui règle le support (4) dans une première position dans laquelle le premier substrat (1a) se trouve en position de traitement (E) ou dans une deuxième position dans laquelle un deuxième substrat (1b) se trouve en position de traitement (E).

7. Dispositif selon l'une des revendications précédentes **caractérisé en ce qu'**il présente de plus un dérouleur et un enrouleur pour chacun des substrats (1a, 1b) et des dispositifs conducteurs pour conduire les substrats des dérouleurs vers les moyens de guidage fixes et mobiles (2, 3) et de là, vers les enrouleurs.

8. Dispositif selon l'une des revendications précédentes **caractérisé en ce que** les moyens de guidage mobiles (3a, 3b) sont des rouleaux.

9. Dispositif selon l'une des revendications précédentes **caractérisé en ce que** les moyens de guidage fixes (2a, 2b) sont des rouleaux.

10. Dispositif selon l'une des revendications précédentes **caractérisé en ce que** les moyens de guidage fixes (2a, 2b) sont placés par rapport aux moyens de guidage mobiles (3a, 3b) de façon que pour chaque substrats (1a, 1b), les sections d'une bande de substrat, se trouvant entre un moyen de guidage fixe (2a, 2b) et un moyen de guidage mobile (3a, 3b), passent parallèlement par rapport à la section de la bande de substrat qui se trouve entre les moyens de guidage mobiles (3a, 3b) d'une paire de moyens de guidage mobiles (3a, 3b).
